Europäisches Patentamt

European Patent Office

Office européen des brevets

(19)

(11) Veröffentlichungsnummer : **0 079 971**
**B1**

(12)   **EUROPÄISCHE PATENTSCHRIFT**

(45) Veröffentlichungstag der Patentschrift :
17.07.85

(51) Int. Cl.⁴ : **H 04 N 5/12**

(21) Anmeldenummer : 81109759.1

(22) Anmeldetag : 19.11.81

(54) Digitalschaltung zur Abgabe eines Binärsignals beim Auftreten des Frequenzverhältnisses von Zeilen- und Bildfrequenz.

(43) Veröffentlichungstag der Anmeldung :
01.06.83 Patentblatt 83/22

(45) Bekanntmachung des Hinweises auf die Patenterteilung : 17.07.85 Patentblatt 85/29

(84) Benannte Vertragsstaaten :
DE FR GB IT NL

(56) Entgegenhaltungen :
EP-A- 0 005 946
EP-A- 0 059 773
DE-A- 1 950 684
DE-A- 2 905 809
FR-A- 2 336 840
US-A- 3 916 102
US-A- 4 025 952
US-A- 4 228 461

(73) Patentinhaber : Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
DE FR GB IT NL

(72) Erfinder : Achtstätter, Gerhard, Ing. grad.
Sonnhalde 6
D-7803 Gundelfingen (DE)

(74) Vertreter : Stutzer, Gerhard, Dr.
Deutsche ITT Industries GmbH Patent- und Lizenzabteilung Hans-Bunte-Strasse 19 Postfach 840
D-7800 Freiburg (DE)

## Beschreibung

Die Erfindung betrifft eine Digitalschaltung für Fernsehgeräte zur Abgabe eines Binärsignals beim Auftreten des Frequenzverhältnisses von Bild- und Zeilenfrequenz entsprechend dem Oberbegriff des Anspruchs 1.

In Fernsehempfängern ist bekanntlich die Bildfrequenz und die Zeilenfrequenz durch ein fest vorgegebenes Frequenzverhältnis charakterisiert. Das « Erkennungs »-Signal dieses Frequenzverhältnisses kann dazu dienen, ein Vertikalteil mit interner Erzeugung der Vertikalsynchronimpulse durch Frequenzteilung eines doppeltzeilenfrequenten Signals im Sinne einer verbesserten Vertikalsynchronisierung zu steuern, wie dies beispielsweise aus der Offenlegungsschrift DE-A 24 49 535 prinzipiell bekannt ist. Bei den bekannten Anordnungen kann jedoch noch eine durch Bildwandern auf dem Bildschirm sichtbare Ungenauigkeit auftreten, die auf eine unzureichende Erkennung von auch nur geringfügigen Frequenzfehlern zurückzuführen ist. Wie die Offenlegungsschrift DE-A 29 05 809 zeigt, kann das Bildwandern vollständig beseitigt werden, wenn man ein Signal erzeugt, das das Vorhandensein des fest vorgegebenen Frequenzverhältnisses signalisiert, und wenn man dieses Signal zur Steuerung heranzieht. Der Oberbegriff des Anspruchs 1 geht von dieser Druckschrift aus.

Die Aufgabe der in den Ansprüchen gekennzeichneten Erfindung besteht darin, eine vorzugsweise bei Fernsehgeräten verwendbare Digitalschaltung zur Abgabe eines Binärsignals beim Auftreten eines fest vorgegebenen Frequenzverhältnisses zweier Signale auzugeben, wobei als Ausgangssignal ein Binärsignal abgegeben werden soll, dessen einer Zustand das Vorhandensein und dessen anderer Zustand das Nichtvorhandensein des Frequenzverhältnisses anzeigt.

Eine vergleichbare Digitalschaltung ist in der eigenen, nicht vorveröffentlichten Patentanmeldung EP-A 59 773 bereits vorgeschlagen worden, allerdings zur Ermittlung des Frequenzverhältnisses zwischen der Farbträgerfrequenz und der Zeilenfrequenz. Zu diesem Zweck ist die ältere Digitalschaltung zur Abgabe eines Binärsignals beim Auftreten eines fest vorgegebenen Frequenzverhältnisses zweier Signale so ausgebildet, daß das von beiden Signalen höherfrequente erste Signal am Zähleingang eines ersten Vorwärtszählers, dessen Höchstzählerstand größer ist als das Frequenzverhältnis, und das zweite Signal am Zähleingang eines Vorwärts/Rückwärts-Zählers liegt, daß mindestens ein monostabiler Multivibrator vorgesehen ist, dessen Kippzeit gleich der doppelten Zeitdauer ist, die der Vorwärtszähler für das Zählen von einem Zählerstand, der in der Nähe vor dem Frequenzverhältnis-Zählerstand liegt, bis zum Frequenzverhältniszählerstand benötigt, daß der monostabile Multivibrator von einem wenige Zählerstände vor dem Frequenzverhältnis-Zählerstand abgenommenen Signal angesteuert ist und ausgangsseitig am Vorwärts/Rückwärts-Umschalteingang des Vorwärts/Rückwärts-Zählers liegt, daß dem Zähleingang eines zweiten Vorwärtszählers mit Verriegelung des Höchstzählerstandes das zweite Signal zugeführt ist und daß das Binärsignal am Höchstzählerstand-Ausgang des zweiten Vorwärtszählers abzunehmen ist.

Die Vorteile der Erfindung bestehen unter anderem darin, daß sie ausschließlich mit Mitteln der Digitalschaltungstechnik realisiert ist und sich somit für eine monolithische Integrierung bestens eignet. Dabei ist insbesondere an eine Integrierung in Isolierschicht-Feldeffekttransistor-Technik, also in der sogenannten MOS-Technik zu denken.

Die Erfindung wird nun anhand der Figuren der Zeichnung näher erläutert :

Figur 1 zeigt blockschaltbildmäßig ein Ausführungsbeispiel der Erfindung,

Figur 2 zeigt ebenfalls blockschaltbildmäßig die Anwendung der Anordnung nach Fig. 1 bei der Vertikalsynchronisierung eines Fernsehempfängers und

Figur 3 zeigt eine Weiterbildung der Anordnung nach Fig. 2.

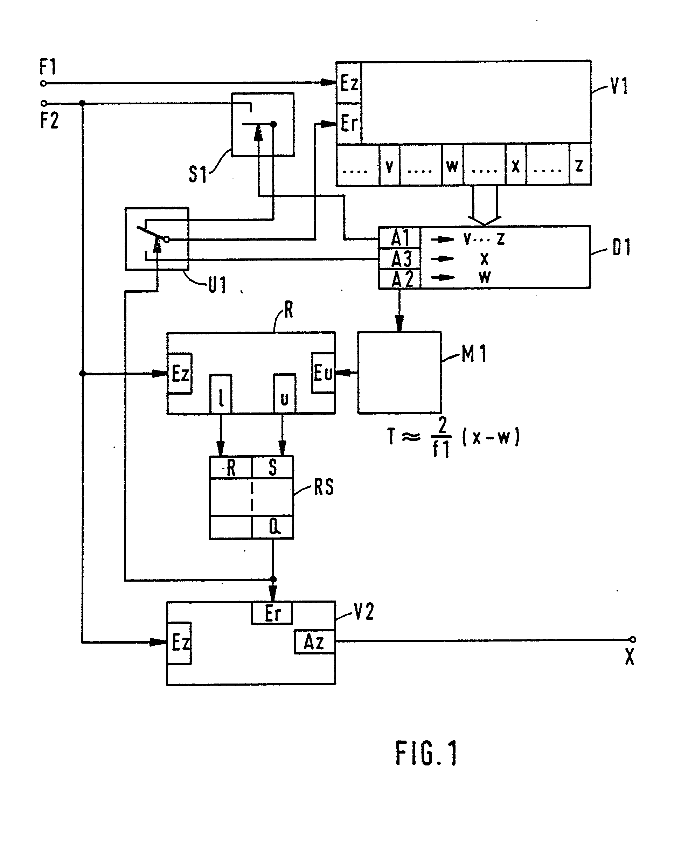

Im Ausführungsbeispiel der Fig. 1 ist dem Zähleingang Ez des ersten Vorwärtszählers V1 das höherfrequente erste Signal F1 der beiden Signale F1, F2, deren festes Frequenzverhältnisses festgestellt bzw. gemessen werden soll, zugeführt. Der Höchstzählerstand z ist dabei größer als das Frequenzverhältnis $x' = f1/f2$, wobei mit f1 die Frequenz des ersten Signals F1 und mit f2 die des zweiten Signals F2 bezeichnet ist.

Mittels des ersten Decoders D1 ist ein oberer Bereich aufeinanderfolgender Zählerstände v ... w ... x ... z des Vorwärtszählers V1 überwacht, wobei dieser Überwachungsbereich auch den Frequenzverhältnis-Zählerstand x und den Höchstzählerstand z umfaßt. Zum Überwachungsbereich gehören ferner ein wenige Zählerstände, z. B. 5 bis 10 Zählerstände, vor dem Frequenzverhältnis-Zählerstand x liegender Zählerstand w sowie der am Anfang des Überwachungsbereichs liegende Zählerstand v. Vorzugsweise sind die unterhalb bzw. oberhalb des Frequenzverhältnis-Zählerstands x liegenden Teilbereiche gleich groß, so daß der Zählerstand x in der Mitte des Überwachungsbereichs angeordnet ist. Für diesen Vorzugsfall gilt also die Beziehung :

$$x - v = z - x$$

Der gesamte Überwachungsbereich ist mittels des ersten Decoders D1 überwacht, wozu jede bekannte derartige Zählerstandüberwachungsschaltung als Decodierer verwendet werden kann. Der erste Decodierer D1 hat den ersten Ausgang A1 für alle Bereichszählerstände v ... z, den zweiten Ausgang A2 für den Zählerstand w sowie den dritten Ausgang A3 für den Frequenzverhältnis-Zählerstand x. Wenn also der erste Vorwärtszähler V1 einen entsprechenden der genannten Zählerstände erreicht, wird bei der vorausgesetzten positiven Logik am jeweiligen Ausgang des ersten Decodierers D1 der positivere H-Pegel zweier Binärsignal-Pegel H, L auftreten. Der erste Ausgang A1 führt demzufolge einen H-Pegel, während der Vorwärtszählers V1 den Überwachungsbereich, also die Zählerstände v ... z, durchläuft.

Der erste Ausgang A1 liegt am Steuereingang der ersten elektronischen Arbeitskontakts S1, d. h. bei erreichten Zählerständen innerhalb des Überwachungsbereichs v ... z ist er geschlossen und das seinem Signaleingang zugeführte zweite Signal F2 gelangt an seinen Ausgang.

Der dritte Ausgang A3 ist mit dem ersten Signaleingang des ersten elektronischen Umschalters U1 verbunden, an dessen zweitem Signaleingang der Ausgang des ersten elektronischen Arbeitskontakts S1 und an dessen Ausgang der Reset-Eingang Er des ersten Vorwärtszählers V1 liegt.

Der zweite Ausgang A2 ist am Triggereingang des ersten monostabilen Multivibrators M1 angeschlossen, der für die Messung ein Zeitfenster bildet und dessen Ausgang mit dem Vorwärts/Rückwärts-Umschalteingang Eu des Vorwärts/Rückwärtszählers R verbunden ist. Diesem Zähler R sind die Impulse des zweiten Signals F2 zugeführt, die er somit in Abhängigkeit vom Ausgangssignal des ersten monostabilen Multivibrators M1 in Vorwärts- oder Rückwärtsrichtung zählt. Ein unterer Zählerstandausgang l und ein oberer Zählerstandausgang u des Zählers R sind überwacht und liegen am R- bzw. S-Eingang des SR-Flipflops RS. Es kann auch ein einen solchen Zählerstand umfassender entsprechender Zählerstandbereich überwacht werden.

Der Q-Ausgang des SR-Flipflops, der dem S-Eingang so zugeordnet ist, daß bei seinem Ansteuern mit einem H-Pegel auch der Q-Ausgang einen H-Pegel annimmt, ist mit dem Steuereingang des ersten elektronischen Umschalters U1 und mit dem Start-Reset-Eingang Er des zweiten Vorwärtszählers V2 verbunden, dessen Zähleingang Ez das zweite Signal F2 zugeführt ist und an dessen Höchstzählerstandausgang Az das beabsichtigte Binärsignal X für das Frequenzverhältnis x' entsteht und abgenommen werden kann. Der Start-Reset-Eingang Er ist dabei ein bei derartigen Zählern üblicher sogenannter Activ-Low-Eingang, d. h. der Zähler wird in die Ausgangsposition gesetzt und dort festgehalten, solange der von den beiden Binär-Signal-Pegeln L, H negativere L-Pegel anliegt.

Für die folgende Funktionserläuterung sei angenommen, daß der Anfangszustand der Digitalschaltung dadurch gekennzeichnet sei, daß das SR-Flipflop RS sich in seinem R-Zustand befindet, was beispielsweise durch einen entsprechenden Impuls beim Einschalten der Betriebsspannung erreicht werden kann. Der erste elektronische Umschalter U1 befindet sich dann im gezeichneten Zustand, d. h. der Ausgang des ersten elektronischen Arbeitskontaktes S1 ist zum Reset-Eingang Er des ersten Vorwärtszählers V1 durchverbunden.

Somit wird der erste Vorwärtszähler V1 zwischen zwei Impulsen des zweiten Signals F2, ausgehend von einem beliebigen Zählerstand, mehr als einen vollen oder einen nicht ganz vollen Zählerumlauf machen ; auf jeden Fall wird er einmal über den Höchstzählerstand z hinausgelangen und wieder vom Zählerstand 0 aus zu zählen beginnen. Nach mehr oder weniger vielen Zählerumläufen wird jedoch ein Zustand erreicht sein, in dem ein am Steuereingang des ersten elektronischen Arbeitskontaktes S1 liegender und den ersten Vorwärtszähler V1 rücksetzbarer Pegel, also beispielsweise ein entsprechender H-Pegel, gerade dann auftritt, wenn der Arbeitskontakt S1 geschlossen ist, weil gerade der Überwachungsbereich v ... z des ersten Vorwärtszählers V1 von der Zählung erreicht ist und somit über den ersten Ausgang A1 des ersten Decodierers D1 der Arbeitskontakt geschlossen ist. In diesem Fall wird der Vorwärtszähler V1 durch das zweite Signal F2 zurückgesetzt.

Bei Erreichen des Zählerstandes w wird der erste monostabile Multivibrator M1 über den zweiten Ausgang A2 des ersten Decodierers D1 getriggert. Während der Dauer seines dadurch ausgelösten Ausgangsimpulses wird der Vorwärts/Rückwärts-Zähler R über seinen Vorwärts/Rückwärts-Umschalteingang Eu auf Vorwärtszählen geschaltet, wobei die erwähnte Dauer etwa so gewählt ist, daß in dieser Zeit der erste Vorwärtszähler V1 doppelt soviele Zählerstände durchläuft, wie der Differenz x − w entspricht. Für das vom ersten Multivibrator M1 gebildete Zeitfenster T gilt etwa folgende Näherung :

$$T \approx 2/f1 \, (x - w)$$

Jeder während des Zeitfensters T eintreffende H-Pegel des zweiten Signals F2 wird somit vom Vorwärts/Rückwärts-Zähler R in Vorwärtsrichtung gezählt, während die außerhalb des Zeitfensters T eintreffenden Impulse in Rückwärtsrichtung gezählt werden. Aufgrund der Tatsache, daß der Zählerstand w nahe beim Frequenzverhältnis-Zählerstand x liegt, ergibt sich, daß, wenn der Multivibrator M1 vom Ausgang A2 getriggert wird, die Frequenzen schon so nahe beieinander liegen, daß dann auch praktisch jeder Impuls des zweiten Signals F2 zur Vorwärtszählung beiträgt. Nach wenigen Zählerumläufen des ersten Vorwärtszählers V1 wird dann der obere Zählerstand u im Vorwärts/Rückwärtszähler R erreicht, wodurch das SR-Flipflip RS über seinen S-Eingang gesetzt wird. Durch den H-Pegel am Q-Ausgang wird der erste elektronische Umschalter U1 nun auf den Ausgang A3 umgeschaltet, so daß der Vorwärtszähler V1 bei jedem Zählerstandes x sich selbst zurücksetzt.

Zugleich mit dem H-Pegel am Q-Ausgang des SR-Flipflops RS wird über den Start-Reset-Eingang Er des zweiten Vorwärtszähler V2 dieser zur Zählung freigegeben und zählt alle Impulse des zweiten Signals F2 solange, bis er den Höchstzählerstand z erreicht und dort aufgrund der Verriegelung des Höchstzählerstandes stehenbleibt. Am Höchstzählerstand-Ausgang Az kann somit das bezweckte Binärsignal X für das Auftreten des fest vorgegebenen Frequenzverhältnisses $x' = f1/f2$ abgenommen werden.

Weichen andererseits während der Dauer des « eingerasteten » Zustandes mit Selbstrücksetzung über den Frequenzverhältnis-Zählerstand x die beiden Signalfrequenzen voneinander ab, so werden die Impulse des zweiten Signals F2 nicht mehr in das Zeitfenster T des Multivibrators M1 fallen und somit vom Vorwärts/Rückwärtszähler R in Rückwärtsrichtung gezählt werden, und zwar solange, bis der untere Zählerstand 1 erreicht wird und somit das SR-Flipflop RS in seinen R-Zustand zurückgesetzt wird. Dadurch wird der zweite Vorwärtszähler V2 ebenfalls zurückgesetzt und am Höchstzählerstandausgang Az erscheint somit als Binärsignal X ein L-Pegel. Ferner wird der Reset-Eingang Er des ersten Vorwärtszählers V1 durch Umschaltung des ersten elektronischen Umschalters U1 auf den Arbeitskontakt S1 wieder mit dem zweiten Signal F2 als Rücksetzimpulsen beaufschlagt. Das anfangs geschilderte « Einfangen » beginnt also von neuem. Die Zähler V2, R haben somit auch eine Störbefreiungsfunktion.

Wie in der Beschreibungseinleitung auf Seite 1 bereits erwähnt ist, kann die Digitalschaltung nach der Erfindung vorteilhaft in Fernsehgeräten verwendet werden, wenn das Frequenzverhältnis x' gleich dem zwischen Zeilenimpulsen und Bildimpulsen gewählt wird und wenn derartige Fernsehgeräte ein Vertikalteil mit interner Erzeugung der Vertikalsynchronimpulse B durch Frequenzteilung eines doppelt-zeilenfrequenten Signals aufweisen. Das Binärsignal X kann dann zur Steuerung eines derartigen Vertikalteils herangezogen werden.

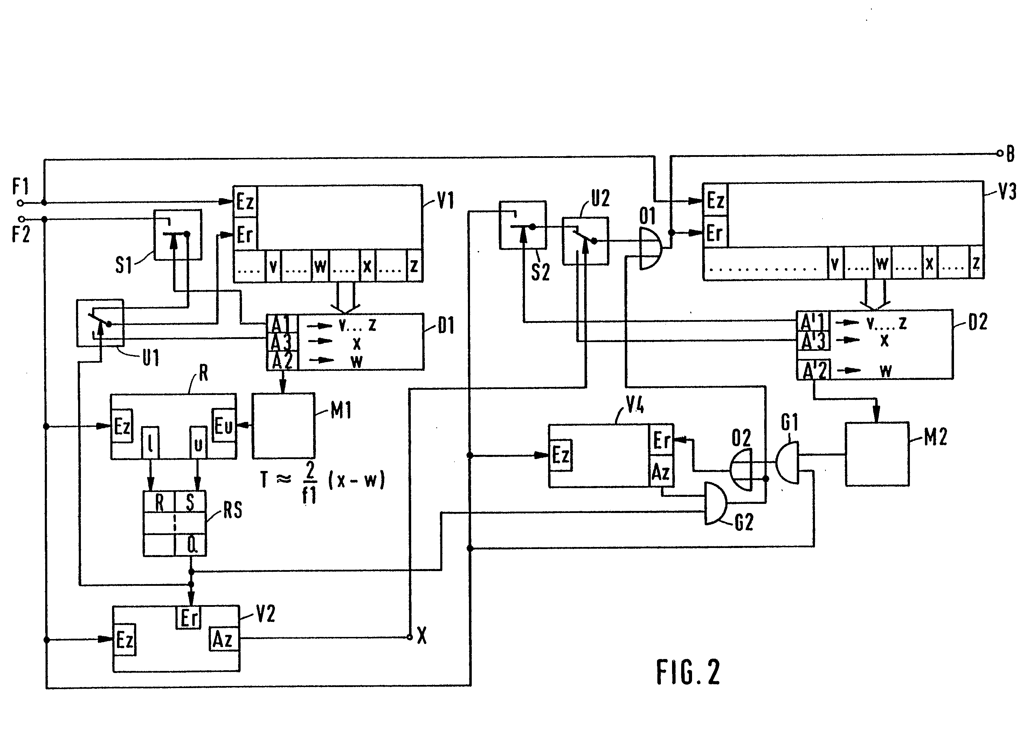

Das Blockschaltbild eines Ausführungsbeispiels einer derartigen Anwendung ist in Fig. 2 gezeigt, deren linke Hälfte ersichtlich mit Fig. 1 identisch ist und somit nicht näher zu beschreiben ist. Als der erwähnte Frequenzteiler des Vertikalteils ist in Fig. 2 der dritte Vorwärtszähler V3 vorgesehen, dessen Zählkapazität z gleich der des ersten Vorwärtszählers V1 ist und dessen Zähleingang Ez ebenfalls das erste Signal F1 zugeführt ist, das in diesem Fall das erwähnte doppelt-zeilenfrequente Signal, vorzugsweise ein aus dem Horizontaloszillator stammendes Signal ist. Mittels des zweiten Decodierers D2 ist derselbe obere Zählerstandbereich v ... z überwacht wie beim ersten Vorwärtszähler V1. Der zweite Decoder D2 hat die mit den Ausgängen A1, A2, A3 des ersten Decoders D1 gleichartigen Ausgänge A'1 für alle Bereichszählerstände v ... z, A'2 für den wenige Zählerstände vor dem Frequenzverhältnis-Zählerstand x liegenden Zählerstand w und A'3 für den Frequenzverhältnis-Zählerstand x selbst. Der Ausgang A'1 liegt am Steuereingang des zweiten elektronischen Arbeitskontaktes S2, dessen Signaleingang das zweite Signal F2, in Fig. 2 also die aus dem empfangenen Fernsehsignal abgetrennten und entsprechend aufbereiteten Vertikalsynchronimpulse, zugeführt sind. Der zweite Ausgang A'2 des zweiten Decoders D2 liegt am Triggereingang des zweiten monostabilen Multivibrators M2 und der dritte Ausgang A'3 am ersten Signaleingang des zweiten elektronischen Umschalters U2, dessen erster Eingang mit dem Ausgang des zweiten elektronischen Arbeitskontakts S2 verbunden ist. Der Ausgang des Umschalters U2 liegt am ersten Eingang des ersten ODER-Gatters O1, dessen Ausgang mit dem Reset-Eingang Er des dritten Vorwärtszählers V3 verbunden ist.

Der Ausgang des zweiten monostabilen Multivibrators M2 liegt am ersten Eingang des ersten UND-Gatters G1, dessen zweitem Eingang das zweite Signal F2 zugeführt ist, ebenso wie dem Zähleingang Ez des vierten Vorwärtszählers V4, dessen Höchstzählerstand verriegelt ist. Der zugehörige Höchstzählerstand-Ausgang Az liegt am ersten Eingang des zweiten UND-Gatters G2, dessen zweiter Eingang mit dem Q-Ausgang des SR-Flipflops RS verbunden ist und dessen Ausgang am ersten Eingang des zweiten ODER-Gatters O2 und am zweiten Eingang des ersten ODER-Gatters O1 liegt. Der Ausgang des ersten UND-Gatters G1 liegt am zweiten Eingang des zweiten ODER-Gatters O2, dessen Ausgang mit dem Reset-Eingang Er des vierten Vorwärtszählers V4 verbunden ist.

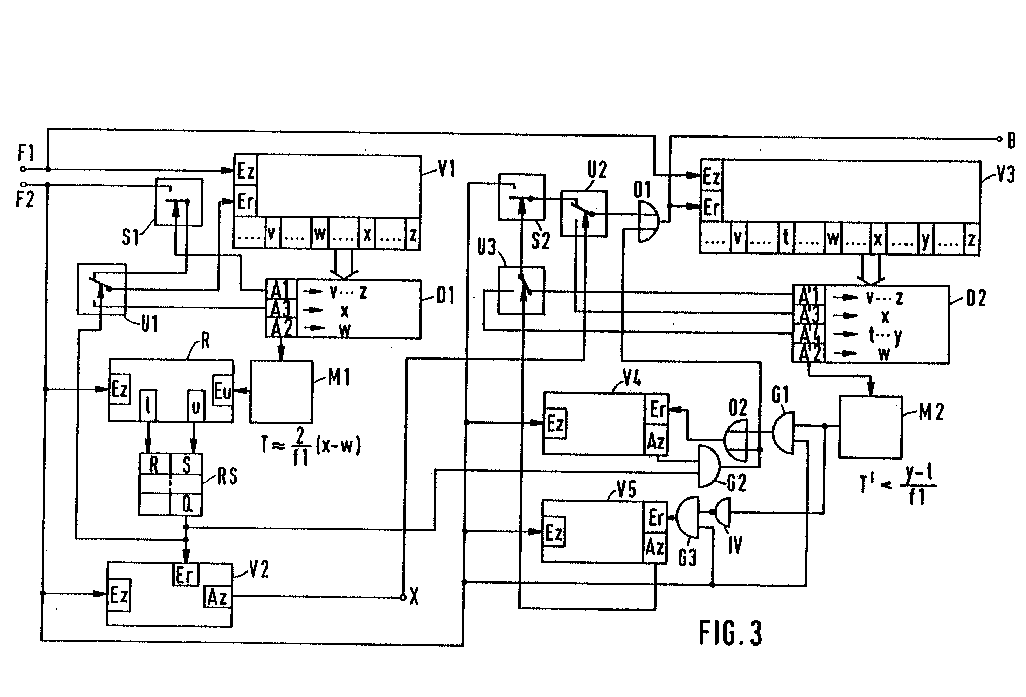

In Fig. 3 ist eine Weiterbildung der Anordnung nach Fig. 2 gezeigt. Diese Weiterbildung besteht darin, daß zusätzlich der fünfte Vorwärtszähler V5 mit dem seinem Rücksetzeingang zugeordneten dritten UND-Gatter G3 und dem diesem vorgeschalteten Inverter IV sowie der dritte elektronische Umschalter U3 vorgesehen sind. Im einzelnen ist dem ersten Eingang des dritten UND-Gatters G3 über den Inverter IV das Ausgangssignal des zweiten monostabilen Multivibrators M2 zugeführt, während sein zweiter Eingang mit dem zweiten Signal F2 gespeist ist und sein Ausgang am Reset-Eingang Er des fünften Vorwärtszählers V5 angeschlossen ist, der ebenfalls eine Verriegelung seines Höchstzählerstandes aufweist. Der zugehörige Höchstzählerzustandausgang Az liegt am Steuereingang des dritten elektronischen Umschalters U3. Dieser ist in die Verbindung zwischen dem ersten Ausgang A'1 des zweiten Decoders D2 und dem Steuereingang des zweiten elektronischen Arbeitskontaktes S2 derart eingefügt, daß sein Ausgang mit dem Steuereingang, sein erster Signaleingang mit dem ersten Ausgang A'1 und sein zweiter Signaleingang mit dem vierten Ausgang A'4 des zweiten Decoders D2 verbunden ist, welcher Ausgang A'4 zusätzlich vorgesehen ist und einen symmetrisch zum Frequenzverhältnis-Zählerstand x liegenden Zählerstandabschnitt t ... y überwacht, dessen vor dem Frequenzverhältnis-Zählerstand x liegender Teilabschnitt größer ist als die Differenz x − w.

Die Funktionsweise des dritten Vorwärtszählers V3 ist bezüglich des Überwachungsbereichs v ... z und der Zählerstände w, x identisch mit dem ersten Vorwärtszähler V1. Zusätzlich ist jedoch mit dem Überwachungsabschnitt t ... y die Möglichkeit gegeben, ein gegenüber dem durch den Überwachungsbereich v ... z vorgegebenen Zeitfenster kleineres Zeitfenster zu bilden, zwischen denen beiden mittels des dritten elektronischen Umschalters U3 in Abhängigkeit vom Ausgangssignal des Höchstzählerstandes Az des fünften Vorwärtszählers V5 sozusagen gewählt werden kann. Die Durchschaltung auf den dritten Ausgang A'3, also die Decodierung des Frequenzverhältnis-Zählerstandes x des dritten Vorwärtszählers V3, geschieht mittels des aus der Digitalschaltung nach Fig. 1 stammenden Binärsignals X, d. h., wenn die Digitalschaltung das Vorliegen des exakten Frequenzverhältnisses x' festgestellt hat, wird der dritte Vorwärtszähler V3 unabhängig von den sonst noch in den ihm zugeordneten Teilschaltungen ablaufenden Vorgängen auf Rücksetzen bei seinem Frequenzverhältnis-Zählerstand x geschaltet. Dies geschieht durch Umschalten des zweiten elektronischen Umschalters U2 auf den dritten Ausgang A'3, so daß der Zählerstand x über das erste ODER-Gatter O1 an den Rücksetzeingang Er des dritten Vorwärtszählers V3 gelangt. Zugleich ist das Ausgangssignal des ersten ODER-Gatters O1 auch das intern erzeugte Vertikalsynchronsignal B. Wenn also das Binärsignal X einen H-Pegel aufweist, erzeugt der dritte Vorwärtszähler V3 nachjeweils x' Impulsen des ersten Signals F1, also des doppelt-zeilenfrequenten Signals, über die Decodierung seines Zählerstandes x einen Ausgangsimpuls B, der zugleich ihn zurücksetzt.

Während des durch den H-Pegel des Binärsignals X bestimmten Betriebs des dritten Vorwärtszählers V3 wird jedoch zusätzlich die Phasenlage zwischen den beiden Signalen F2, B gemessen. Diese Funktion hat der vierte Vorwärtszähler V4 mit den ihm zugeordneten Schaltungsteilen. Zu dieser Phasenmessung wird das mittels des zweiten monostabilen Multivibrators M2 gebildete Zeitfenster herangezogen ; fallen nämlich die Impulse des zweiten Signals F2, also die gesendeten Vertikalsynchronimpulse, in dieses Zeitfenster (nur dann erscheint am Ausgang des ersten UND-Gatters G1 ein H-Pegel), so wird über das zweite ODER-Gatter O2 der vierte Vorwärtszähler V4 zurückgesetzt. Dies bedeutet, daß die seinem Eingang zugeführten Impulse des zweiten Signals F2 nicht gezählt werden. Bei richtiger Phasenlage zählt also dieser Zähler nicht. Beginnt die Phasenlage jedoch von null abzuweichen, so werden die Rücksetzimpulse ausbleiben und er zählt die Impulse des zweiten Signals F2. Der zum Erreichen des Höchstzählerstandes des vierten Vorwahlzählers V4 führende Impuls des zweiten Signals F2 bewirkt über das zweite UND-Gatter G2 zum einen sein eigenes Rücksetzen und zum anderen auch über das erste

ODER-Gatter O1 das Zurücksetzen des dritten Vorwärtszählers V3, so daß dieser nun wieder phasenrichtig mit dem zweiten Signal F2 läuft. Diese zweifache Rücksetzung wird jedoch vom zweiten UND-Gatter G2 nur dann erlaubt, wenn auch in der Digitalschaltung nach Fig. 1 am Q-Ausgang des SR-Flipflops RS ein H-Pegel vorhanden ist, d. h. wenn die Digitalschaltung ein schon einigermaßen richtiges Frequenzverhältnis festgestellt hat. Dieser H-Pegel am Q-Ausgang tritt ja nur dann auf, wenn die Digitalschaltung während mehrerer Impulse des zweiten Signals F2 das richtige Frequenzverhältnis x' festgestellt hat.

Der in Fig. 3 zusätzlich noch vorgesehene fünfte Vorwärtszähler V5 steuert den dritten Umschalter U3 und somit die bereits oben erwähnte Umschaltung zwischen den beiden Zählerstandsbereichen v ... z und t ... y. Diese zusätzliche Umschaltung ergibt einen weiter verbesserten Betrieb, insbesondere wenn das Fernsehgerät, wie heute allgemein üblich für Video-Recorderbetrieb ausgerüstet ist. Die Beschaltung des Rücksetzeingangs Er des fünften Vorwärtszählers V5 über den Inverter IV und das dritte UND-Gatter G3 ist so vorgenommen, daß Impulse des zweiten Signals F2, die in das vom zweiten Multivibrator M2 gebildete Zeitfenster fallen, gezählt werden (derartige Impulse werden vom vierten Vorwahlzähler V4 gerade nicht gezählt). Bei Erreichen des Höchstzählerstandes wird über den Höchstzählerstand-Ausgang Az die Umschaltung des dritten elektronischen Umschalters U3 vorgenommen, d. h., nach der durch die Zählkapazität des fünften Vorwärtszählers V5 bedingten Zeit, die durch Ausbildung dieses Zählers als Vorwahlzähler einstellbar gemacht sein kann, wird zwischen den Ausgängen A'1 und A'4 des zweiten Decodierers D2, also dem Überwachungsbereich v ... z und dem Zählerstandabschnitt t ... y, umgeschaltet.

Das Zeitfenster T' des zweiten monostabilen Multivibrators M2 wird etwas kleiner gewählt, als die für den Durchlauf des Zählerstandabschnitts t ... y erforderliche Zeit, d. h. es gilt die Beziehung

$$T' < (y - t)/f1$$

Bei einer realisierten Schaltungsanordnung für wahlweise die europäische oder die amerikanische Fernsehnorm mit einem Frequenzverhältnis x' von 625 (europäisch) bzw. 525 (amerikanisch) wurden für die einzelnen Zählerstände der Vorwahlzähler V1, V3 folgende Zahlenwerte gewählt :

$$v = 561 \quad t = 618$$
$$w = 620 \quad x = 625$$
$$y = 632 \quad z = 689$$

Die Umschaltung zwischen der europäischen und der amerikanischen Norm geschieht am einfachsten dadurch, daß die beiden Zähler V1, V3 als Vorwahlzähler ausgebildet sind und bei amerikanischer Norm auf den Zählerstand 100 gesetzt

werden und dieser auch als Rücksetzzählerstand dient.

In der erwähnten ausgeführten Schaltung hatte der Vorwärts/Rückwärts-Zähler R eine Überwachung für Zählerstände < 2 und > 5, die zur Ansteuerung des R- bzw. S-Eingang des SR-Flipflops RS dienten. Die Höchstzählerstände der Zähler V2, V4, V5 betrugen 4, 4 bzw. 256. Die Zeitfenster T, T' der Multivibratoren M1, M2 hatten die Werte T = 320 µs T' = 320 µs. Der Höchstzählerstand des Zählers R betrug 12.

Die Multivibratoren M1, M2 werden zweckmäßigerweise als digitale monostabile Multivibratoren mittels entsprechender bekannter Zählerbeschaltung realisiert.

Es ist selbstverständlich, daß, obwohl die Erfindung unter Zugrundelegung von positiver Logik beschrieben und erläutert wurde, eine Realisierung derselben Funktion mittels auf negativer Logik basierender Schaltungen keine Abweichung vom grundlegenden Erfindungsgedanken darstellt. Eine derartige Realisierung und die dabei erforderlich werdenden Änderungen der Schaltung liegen im Rahmen fachmännischen Handelns. Es liegt ebenfalls im Rahmen der Erfindung, wenn, beispielsweise bei der Realisierung der Erfindung mittels der MOS-Technik, die gezeigten UND- und ODER-Gatter durch andere logische Grundglieder systembedingt ersetzt werden. Dies liegt ebenfalls im Rahmen fachmännischen Handelns. Für das Maß der Störbefreiung durch den Zähler R ist die Differenz zwischen dem Höchstzählerstand und dem oberen Zählerstand µ maßgebend ; je größer diese Differenz ist, um so größer ist die Störbefreiungswirkung. Es ist ein Kompromiß zwischen dieser Wirkung und der Reaktionszeit des Systems zu finden, die ebenfalls vom Höchstzählerstand des Zählers R abhängt. Es kann von Vorteil sein, wenn der Zähler R mit einem Reset-Eingang ausgerüstet wird, dem im Bedarfsfall ein gesondertes Reset-Signal zugeführt wird.

**Patentansprüche**

1. Digitalschaltung für Fernsehgeräte zur Abgabe eines Binärsignals (X) beim Auftreten des Frequenzverhältnisses ($x' = f1/f2$) zwischen einem ersten Signal (F1) mit der Zeilenfrequenz (f1) und einem zweiten Signal (F2) mit der Bildfrequenz (f2), die einen ersten Vorwärtszähler (V1) aufweist, dessen Höchstzählerstand (z) größer als das Frequenzverhältnis (x') ist, dessen Zähleingang (Ez) das erste Signal (F1) zugeführt ist und dessen Rücksetzeingang (Er) wahlweise über einen ersten Umschalter (U1) das zweite Signal (F2) oder ein aus dem ersten Signal (F1) abgeleitetes und mit dem zweiten Signal (F2) übereinstimmendes Signal zugeführt ist, welcher erste Umschalter (U1) über einen ersten Decoder (D1) bei Übereinstimmung des abgeleiteten Signals mit dem zweiten Signal (F2) das abgeleitete Signal, dagegen bei Nichtübereinstimmung das zweite Signal (F2) auf den Rücksetzeingang (Er) durchschaltet,
gekennzeichnet durch folgende Merkmale :

— das Erreichen eines Zählerstandes des ersten Vorwärtszählers (V1) in einem oberen Bereich aufeinanderfolgender Zählerstände (v ... z), der den Frequenzverhältniszählerstand (x) und den Höchstzählerstand (z) umfaßt, ist mittels des ersten Decoders (D1) überwacht, der einen ersten Ausgang (A1) für alle Bereichszählerstände (v ... z), einen zweiten Ausgang (A2) für einen wenige Zählerstände vor dem Frequenzverhältnis-Zählerstand (x) liegenden Zählerstand (w) und einen dritten Ausgang (A3) für den Frequenzverhältnis-Zählerstand (x) aufweist,

— der erste Ausgang (A1) des ersten Decoders (D1) liegt am Steuereingang eines ersten elektronischen Arbeitskontakts (S1), dessen Signaleingang das zweite Signal (F2) zugeführt ist,

— der zweite Ausgang (A2) des ersten Decoders (D1) ist am Triggereingang eines ersten monostabilen Multivibrators (M1) angeschlossen, der ein Zeitfenstersignal der Dauer $T \approx 2(x - w)/f1$ bildet,

— der dritte Ausgang (A3) des ersten Decoders (d1) ist am ersten von zwei Signaleingängen des ersten elektronischen Umschalters (U1) angeschlossen, dessen zweiter Signaleingang am Ausgang des ersten elektronischen Arbeitskontakts (S1) liegt,

— der Ausgang des ersten monostabilen Multivibrators (M1) liegt am Vorwärts/Rückwärts-Umschalteingang (Eu) eines Vorwärts/Rückwärts-Zählers (R), dessen Zähleingang (Ez) das zweite Signal (F2) zugeführt ist und der von während des Zeitfensters eintreffenden Impulsen des zweiten Signals (F2) in Rückwärtsrichtung gezählt wird,

— ein unterer Zählerstandausgang (l) und ein oberer Zählerstandausgang (u) des Vorwärts/Rückwärts-Zählers (R) liegen am R- bzw. S-Eingang eines SR-Flipflops (RS), dessen Q-Ausgang mit dem Steuereingang des ersten elektronischen Umschalters (U1) verbunden ist, und

— dem Zähleingang (Ez) eines zweiten Vorwärtszählers (V2) mit Verriegelung des Höchstzählerstandes ist das zweite Signal (F2) zugeführt, dessen Start-Reset-Eingang (Er) mit dem Q-Ausgang des SR-Flipflops (RS) verbunden ist und der die Impulse des zweiten Signals (F2) solange zählt, bis sein Höchstzählerstand erreicht ist und dort aufgrund von dessen Verriegelung stehen bleibt, welcher Zustand das bezweckte Binärsignal (X) darstellt.

2. Verwendung einer Digitalschaltung nach Anspruch 1 zur Steuerung eines Vertikalteils mit interner Erzeugung der Vertikalsynchronimpulse (B) durch Frequenzteilung eines doppelt-zeilenfrequenten Signals.

3. Digitalschaltung nach Anspruch 2, gekennzeichnet durch folgende Merkmale :

— dem Zähleingang (Ez) eines dritten Vorwärtszählers (V3) dessen Zählkapazität (z) gleich der des ersten Vorwärtszählers (V1) ist, ist das doppelt-zeilenfrequente Signal als erstes Signal (F1) zugeführt,

— das Erreichen eines Zählerstandes des dritten Vorwärtszählers (V3) im gleichen oberen Bereich aufeinanderfolgender Zählerstände (v ... z) ist mittels eines zweiten Decoders (D2) überwacht, der einen ersten Ausgang (A'1) für alle Bereichszählerstände (v ... z), einen zweiten Ausgang (A'2) für den wenige Zählerstände vor dem Frequenzverhältnis-Zählerstand (x) liegenden Zählerstand (w) und einen dritten Ausgang (A'3) für den Frequenzverhältnis-Zählerstand (x) aufweist,

— der erste Ausgang (A'1) des zweiten Decoders (D2) liegt am Steuereingang eines zweiten elektronischen Arbeitskontakts (S2), dessen Signaleingang die empfangenen Vertikalsynchronimpulse als zweites Signal (F2) zugeführt sind,

— der zweite Ausgang (A'2) des zweiten Decoders (D2) ist am Triggereingang eines zweiten monostabilen Multivibrators (M2) und dessen dritter Ausgang (A'3) am ersten von zwei Signaleingängen eines zweiten elektronischen Umschalters (U2) angeschlossen, dessen Ausgang am ersten Eingang eines ersten ODER-Gatters (O1) liegt, dessen Ausgang mit dem Reset-Eingang (Er) des dritten Vorwärtszählers (V3) verbunden ist und an dem die Vertikalsynchronimpulse (B) abzunehmen sind,

— der Ausgang des zweiten monostabilen Multivibrators (M2) liegt am ersten Eingang eines ersten UND-Gatters (G1), dessen zweitem Eingang das zweite Signal (F2) zugeführt ist,

— dem Zähleingang (Ez) eines vierten Vorwärtszählers (V4) mit Verriegelung des Höchstzählerstandes ist das zweite Signal (F2) zugeführt, dessen Höchstzählerstand-Ausgang (Az) am ersten Eingang eines zweiten UND-Gatters (G2) liegt, dessen zweiter Eingang mit dem Q-Ausgang des SR-Flipflops (RS) verbunden ist und dessen Ausgang am zweiten Eingang des ersten ODER-Gatters (O1) und am ersten Eingang eines zweiten ODER-Gatters (O2) liegt,

— der Ausgang des ersten UND-Gatters (G1) liegt am zweiten Eingang des zweiten ODER-Gatters (O2), dessen Ausgang mit dem Reset-Eingang (Er) des vierten Vorwärtszählers (V4) verbunden ist, und

— dem Steuereingang des zweiten elektronischen Umschalters (U2) ist das Binärsignal (X) zugeführt.

4. Digitalschaltung nach Anspruch 3, gekennzeichnet durch folgende Merkmale :

— der zweite Decoder (D2) hat einen vierten Ausgang (A'4) für einen symmetrisch zum Frequenzverhältnis-Zählerstand (x) liegenden Zählerstand (t ... y), dessen vor dem Frequenzverhältnis-Zählerstand (x) liegender Teilabschnitt größer ist als die Differenz x − w,

— in die Verbindung zwischen dem ersten Ausgang (A'1) des zweiten Decoders (D2) und dem Steuereingang des zweiten elektronischen Arbeitskontaktes (S2) ist ein dritter elektronischer Umschalter (U3) derart eingefügt, daß sein Ausgang mit dem Steuereingang, sein erster Signaleingang mit dem ersten Ausgang (A'1) und sein zweiter Signaleingang mit dem vierten Ausgang (A'4) des zweiten Decoders (D2) verbunden ist,

— der Ausgang des zweiten monostabilen Multivibrators (M2) liegt über einen Inverter (IV) am ersten Eingang eines dritten UND-Gatters (G3), dessen zweitem Eingang das zweite Signal (F2) zugeführt ist und

— dem Zähleingang (Ez) eines fünften Vorwärtszählers (V5) mit Verriegelung des Höchstzählerstandes ist das zweite Signal (F2) zugeführt, dessen Reset-Eingang (Er) am Ausgang des dritten UND-Gatters (G3) liegt und dessen Höchstzählerstand-Ausgang (Az) mit dem Steuereingang des dritten elektronischen Umschalters (U3) verbunden ist.

**Claims**

1. Digital circuit for television sets for generating a binary signal (X) on the occurrence of the frequency ratio (x' = f1/f2) between a first signal (F1) with the horizontal frequency (f1) and a second signal (F2) with the field frequency (f2), comprising a first up-counter (V1) having a maximum count (z) greater than the frequency ratio (x') to whose count input (E2) the first signal (F1) is applied, and to whose reset input (Er) either the second signal (F2) or a signal derived from the first signal (F1) and agreeing with the second signal (F2) can be applied via a first changeover switch (U1) which, under control of a first decoder (D1), applies to the reset input (Er) the derived signal in case of agreement between the derived signal and the second signal (F2), and the second signal (F2) in case of disagreement, characterized by the following features :

— the attainment of a count of the first up-counter (V1) in an upper range of successive counts (v ... z) which includes the frequency-ratio count (x) and the maximum count (z) is monitored by means of the first decoder (D1), having a first output (A1) for all range counts (v ... z), a second output (A2) for a count (w) lying a few counts before the frequency-ratio count (x), and a third output (A3) for the frequency-ratio count (x) ;

— the first output (A1) of the first decoder (D1) is coupled to the control input of a first electronic make contact (S1) whose signal input is presented with the second signal (F2) ;

— the second output (A2) of the first decoder (D1) is coupled to the trigger input of a first monostable multivibrator (M1) forming a time-window signal having the duration $T \approx 2(x - w)/f1$, the third output (A3) of the first decoder (D1) is coupled to the first of two signal inputs of the first electronic changeover switch (U1), having its second signal input connected to the output of the first electronic make contact (S1) ;

— the output of the first monostable multivibrator (M1) is coupled to the up-down control input (Eu) of an up-down counter (R) whose count input (E2) is presented with the second signal (F2), and which is caused to count up by pulses of the second signal (F2) arriving during the time window, and to count down by pulses of the second signal (F2) arriving outside the time window ;
— a lower count output (l) and an upper count output (u) of the up-down counter (R) are connected to the R input and the S input, respectively, of an RS flip-flop (RS) having its Q output coupled to the control input of the first electronic changeover switch (U1), and
— the second signal (F2) is applied to the count input (Ez) of a second up-counter (V2) with locked-out maximum count whose start-reset input (Er) is connected to the Q output of the RS flip-flop (RS), and which counts the pulses of the second signal (F2) until its maximum count is reached, and stops there due to the lockout of the maximum count, which state represents the binary signal (X) to be generated.

2. Use of a digital circuit as claimed in claim 1 to control a vertical section in which the vertical synchronizing pulses (B) are generated by frequency division of a signal of twice the horizontal frequency.

3. A digital circuit as claimed in claim 2, characterized by the following features :
— The signal of twice the horizontal frequency is applied as the first signal (F1) to the count input (Ez) of a third up-counter (V3) whose count capacity (z) is equal to that of the first up-counter (V1) ;
— the attainment of a count of the third up-counter (V3) in the same upper range of successive counts (v ... z) is monitored by means of a second decoder (D2) having a first output (A'1) for all range counts (v ... z), a second output (A'2) for the count (w) lying a few counts before the frequency-ratio count (x), and a third output (A'3) for the frequency-ratio count (x) ;
— the first output (A'1) of the second decoder (D2) is coupled to the control input of a second electronic make contact (S2) whose signal input is fed with the received vertical synchronizing pulses as the second signal (F2) ;
— the second output (A'2) of the second decoder (D2) is coupled to the trigger input of a second monostable multivibrator (F2), and its third output (A'3) is coupled to the first of two signal inputs of a second electronic changeover switch (U2) having its output coupled to the first input of a first OR gate (O1) the output of which is connected to the reset input (Er) of the third up-counter (V3) and provides the vertical synchronizing pulses (B) ;
— the output of the second monostable multivibrator (M2) is coupled to the first input of a first AND gate (G1) whose second input is fed with the second signal (F2) ;
— the second signal (F2) is applied to the count input (Ez) of a fourth up-counter (V4) without locked-out maximum count whose maximum-count output (Az) is coupled to the first input of a second AND gate (G2) having its second input connected to the Q output of the RS flip-flop (RS) and having its output coupled to the second input of the first OR gate (O1) and to the first input of a second OR gate (O2) ;

— the output of the first AND gate (G1) is coupled to the second input of the second OR gate (O2), whose output is connected to the reset input (Er) of the fourth up-counter (V4), and
— the binary signal (X) is applied to the control input of the second electronic changeover switch (U2).

4. A digital circuit as claimed in claim 3, characterized by the following features :
— the second decoder (D2) has a fourth output (A'4) for a count section (t ... y) which is symmetrical with respect to the frequency-ratio count (x) and whose subsection lying before the frequency-ratio count (x) is greater than the difference x − w ;
— inserted in the connection between the first output (A'1) of the second decoder (D2) and the control input of the second electronic make contact (S2) is a third electronic changeover switch (U3) which has its output coupled to the control input of the second electronic make contact (S2), while its first and second signal inputs are connected, respectively, to the first output (A'1) and the fourth output (A'4) of the second decoder (D2) ;
— the output of the second monostable multivibrator (M2) is coupled through an inverter (IV) to the first input of a third AND gate (G3) whose second input is fed with the second signal (F2), and
— the second signal (F2) is applied to the count input (Ez) of a fifth up-counter (V5) with locked-out maximum count which has its reset input (Er) connected to the output of the third AND gate (G3), while its maximum-count output (Az) is coupled to the control input of the third electronic changeover switch (U3).

**Revendications**

1. Circuit numérique pour téléviseurs destiné à fournir un signal binaire (X) lorsqu'apparaît un rapport de fréquences donné (x' = f1/f2) entre un premier signal (F1) associé à la fréquence lignes (f1) et un second signal (F2) associé à la fréquence images (f2), comportant un premier compteur ascendant (V1) dont la position de comptage maximale (z) est supérieure au rapport de fréquences (x'), dont l'entrée de comptage (Ez) reçoit le premier signal (F1) et dont l'entrée de remise à zéro (Er) peut recevoir par l'intermédiaire d'un premier commutateur (U1) soit le second signal (F2) soit un signal dérivé du premier (F1) et conforme au second (F2), ledit premier commutateur (U1) transmettant à l'entrée de remise à zéro (Er) par l'intermédiaire d'un premier décodeur (D1) soit le signal dérivé si celui-ci est conforme au second signal (F2), soit le second signal (F2) en cas de non-conformité, caractérisé en ce que :
— la survenance d'une position de comptage du premier compteur positif (V1) dans la plage supérieure des positions de comptage successives (v ... z) englobant la position de comptage (x) correspondant au rapport de fréquences ainsi que la position de comptage maximale est surveillée par un premier décodeur (D1) qui possède une première sortie (A1) pour toutes les positions de comptage de la plage (v ... z), une seconde sortie (A2) pour une position de comptage (w) placée quelques positions avant la position (x) correspondant au rapport de fréquences et une troisième sortie (A3) pour la position de comptage (x) correspondant au rapport de fréquences,

— la première sortie (A1) du premier décodeur (D1) est raccordée à l'entrée de commande d'un premier contact de travail électronique (S1) dont l'entrée de signaux reçoit le second signal (F2),

— la seconde sortie (A2) du premier décodeur (D1) est raccordée à l'entrée de déclenchement du premier multivibrateur monostable (M1) qui forme un signal de fenêtre de temps de durée T ≙ 2(x − w)/f1,

— la troisième sortie (A3) du premier décodeur (D1) est raccordée à la première des deux entrées de signaux d'un premier commutateur électronique (U1) dont la seconde entrée de signaux est raccordée à la sortie du premier contact de travail électronique (S1),

— la sortie du premier multivibrateur monostable (M1) est raccordée à l'entrée de commutation avance/recul (Eu) d'un compteur ascendant/descendant (R) dont l'entrée de comptage (Ez) reçoit le second signal (F2), ledit compteur étant chargé de compter dans le sens ascendant les impulsions du second signal (F2) s'inscrivant dans la fenêtre de temps et dans le sens à rebours les impulsions du second signal (F2) ne s'inscrivant pas dans la fenêtre de temps,

— une sortie inférieure de position de comptage (1) et une sortie supérieure de position de comptage (u) du compteur ascendant/descendant (R) sont raccordées à l'entrée R et à l'entrée S d'une bascule (RS) dont la sortie Q est reliée à l'entrée de commande du premier commutateur électronique (U1), et

— l'entrée de comptage (Ez) d'un second compteur ascendant (V2) avec verrouillage de la position de comptage maximale reçoit le second signal (F2), son entrée de démarrage et de remise à zéro (Er) étant reliée à la sortie Q de la bascule (RS), de sorte qu'il compte les impulsions du second signal (F2) jusqu'à ce que sa position de comptage maximale soit atteinte et reste bloquée grâce au verrouillage, ledit état représentant le signal binaire désiré (X).

2. Utilisation d'un circuit numérique conforme à la revendication 1 pour commander la section de balayage vertical par génération interne des impulsions de synchronisation verticale (B) par division de fréquence d'un signal de fréquence double de celle du balayage lignes.

3. Circuit numérique conforme à la revendication 2, caractérisé en ce que :

— l'entrée de comptage (Ez) d'un troisième compteur ascendant (V3) dont la capacité de comptage est identique à celle du premier compteur ascendant (V1) reçoit, comme premier signal (F1), le signal de fréquence double de la fréquence lignes,

— la survenance d'une position de comptage du troisième compteur ascendant (V3) dans la même plage supérieure des positions de comptage successives (v ... z) est surveillée grâce à un second décodeur (D2) qui possède une première sortie (A'1) pour toutes les positions de comptage de la plage (v ... z), une seconde sortie (A'2) pour une position de comptage (w) placée quelques positions avant la position (x) et une troisième sortie (A'3) pour la position de comptage (x) correspondant au rapport de fréquences,

— la première sortie (A'1) du second décodeur (D2) est raccordée à l'entrée de commande d'un second contact électronique de travail (S2) dont l'entrée de signaux reçoit comme second signal (F2) les impulsions de synchronisation verticale reçues,

— la seconde sortie (A'2) du second décodeur (D2) est raccordée à l'entrée de déclenchement d'un second multivibrateur monostable (M2) et sa troisième sortie (A'3) à la première de deux entrées de signaux d'un second commutateur électrique (U2) dont la sortie est connectée à la première entrée d'une porte ou (O1) dont la sortie est connectée à l'entrée de remise à zéro (Er) du troisième compteur ascendant (V3) et sur laquelle les impulsions de synchronisation verticale (B) peuvent être prélevées,

— la sortie du second multivibrateur monostable (M2) est raccordée à la première entrée d'une première porte ET (G1) dont la seconde entrée reçoit le second signal (F2),

— l'entrée de comptage (Ez) d'un quatrième compteur ascendant (V4) à verrouillage de la position de comptage maximale reçoit le second signal (F2) dont la sortie de position de comptage maximale (Az) est raccordée à la première entrée d'une seconde porte ET (G2), dont la seconde entrée est raccordée avec la sortie Q de la bascule (RS) et dont la sortie est raccordée à la seconde entrée de la première porte OU (O1) et à la première entrée d'une seconde porte OU (O2),

— la sortie de la première porte ET (G1) est raccordée à la seconde entrée de la seconde porte OU (O2) dont la sortie est reliée à l'entrée de remise à zéro (Er) du quatrième compteur ascendant (V4), et

— l'entrée de commande du second commutateur électronique (U2) reçoit le signal binaire (X).

4. Circuit numérique conforme à la revendication 3, caractérisé en ce que :

— le second décodeur (D2) possède une quatrième sortie (A'4) correspondant à une plage de comptage (t ... y) symétrique par rapport à la position de comptage (x) correspondant au rapport de fréquences, dont la plage partielle située avant la position de comptage (x) correspondant au rapport de fréquences est plus large que la différence x − w,

— sur la liaison entre la première sortie (A'1) du second décodeur (D2) et l'entrée de commande du second contact de travail électronique (S2) est prévu un troisième commutateur électronique (U3) dont la sortie est reliée à l'entrée de commande, la première entrée de signaux à la première sortie (A'1) et la seconde entrée de signaux à la quatrième sortie (A'4) du second décodeur (D2),

— la sortie du second multivibrateur monostable (M2) est reliée par l'intermédiaire d'un inverseur (IV) à la première entrée d'une troisième porte ET (G3) dont la seconde entrée reçoit le second signal (F2), et

— l'entrée de comptage (Ez) d'un cinquième compteur ascendant (V5) avec verrouillage de la position de comptage maximale reçoit le second signal (F2), son entrée de remise à zéro (Er) est raccordée à la sortie de la troisième porte ET (G3) et sa sortie (Az) de position de comptage maximale est reliée à l'entrée de commande d'un troisième commutateur électronique (U3).

FIG.1

$$T \approx \frac{2}{f1}(x-w)$$

FIG. 2

FIG. 3

$$T \approx \frac{2}{f1}(x-w)$$

$$T' < \frac{y-t}{f1}$$

0 079 971